# EUROPÄISCHE PATENTSCHRIFT

(11) **EP 3 671 292 B1**
(45) Veröffentlichungstag und Bekanntmachung des Hinweises auf die Patenterteilung: **26.05.2021**
(21) Anmeldenummer: 19214459.0
(22) Anmeldetag: 09.12.2019
(51) Int. Cl.: G02B 1/14

(54) **VERWENDUNG EINES LACKSYSTEMS ZUM BESCHICHTEN EINER LINSE, VERFAHREN ZUM BESCHICHTEN EINES RANDES EINER LINSE UND LINSE**
LENS, USE OF A COATING SYSTEM FOR COATING A LENS AND METHOD FOR COATING AN EDGE OF A LENS
UTILISATION D'UN SYSTÈME DE PEINTURE PERMETTANT DE REVÊTIR UNE LENTILLE, PROCÉDÉ DE REVÊTEMENT D'UN BORD D'UNE LENTILLE ET LENTILLE

(30) Priorität: 17.12.2018 DE 102018132471
(43) Veröffentlichungstag der Anmeldung: 24.06.2020
(73) Patentinhaber: Leica Camera AG, 35578 Wetzlar (DE)
(72) Erfinder: Wunderlich, Dirk, 35708 Haiger (DE); Best, Stefan, 35606 Solms (DE); Diete, Andreas, 35606 Solms (DE)
(74) Vertreter: Manitz Finsterwald Patent- und Rechtsanwaltspartnerschaft mbB

(56) Entgegenhaltungen:
- FR-A1- 2 828 564
- JP-B2- 5 937 448
- US-A1- 2009 207 374

## Beschreibung

Die vorliegende Erfindung betrifft eine Verwendung eines Lacksystems zum Beschichten einer Linse, ein Verfahren zum Beschichten eines Randes einer Linse und eine Linse.

Zur Vermeidung und Verringerung von Streulicht in einem Linsenzylinder ist es bekannt, den Rand der Linsen zu schwärzen. Dabei ist es erforderlich, dass der geschwärzte Rand eine Vielzahl an Eigenschaften aufweist. So muss die Randschwärzung eine ausreichende Haftfähigkeit aufweisen. Eine sehr gute Lösemittelbeständigkeit ist ebenfalls notwendig, um sicherzustellen, dass bei einer Weiterbearbeitung, beispielsweise beim Fassen der Linsen, bei welcher gegebenenfalls Lösemittel eingesetzt werden, die Randschwärzung nicht beschädigt wird. Ferner ist es erforderlich, dass die Randschwärzung zusätzlich zu den oben genannten Eigenschaften eine hohe UV-Beständigkeit, eine hohe Beständigkeit gegenüber warmen und kalten Temperaturen sowie gegenüber Temperaturwechseln aufweist und auch gegenüber feuchter Wärme, künstlichem Handschweiß, kosmetischen Grundstoffen und Salz beständig ist.

Bei bisher zum Erzeugen der Randschwärzung verwendeten Lacksystemen ist nach dem Auftragen des Lacksystems auf einen Rand einer Linse eine lange Trockenzeit von etwa 48 Stunden bei erhöhter Temperatur und von weiteren etwa 48 Stunden bei Raumtemperatur erforderlich, bis die zuvor genannten Eigenschaften in ausreichendem Maße erzielt werden. Erst nach dieser langen Trockenzeit weist die erzeugte Randschwärzung eine ausreichende Stabilität auf, um die Linse weiterzuverarbeiten. Durch die lange Trockenzeit der bisher verwendeten Lacksysteme verursacht die Erzeugung der Randschwärzung von Linsen hohe Prozesskosten. Die langen Trockenzeiten und damit verbundenen hohen Prozesskosten können darauf zurückgeführt werden, dass die Wärmeübertragung durch Konvektion mit Luft als Zwischenmedium nur einen geringen Wirkungsgrad aufweist.

Es besteht daher ein Bedarf, Randschwärzungen von Linsen innerhalb kurzer Zeit so zu erzeugen, dass sie eine ausreichende Haftfähigkeit, sehr gute Lösemittelbeständigkeit, eine hohe UV-Beständigkeit, einen hohe Beständigkeit gegenüber warmen und kalten Temperaturen, gegenüber Temperaturwechseln und auch gegenüber feuchter Wärme, künstlichem Handschweiß, kosmetischen Grundstoffen und Salz aufweist JP 5 937448B2 offenbart Lacksysteme, die zur Randbeschichtung einer Linse verwendet werden. Das Beispiel 18 offenbart ein Lacksystem, das ein Zwei-Komponenten-Epoxid-Harz-System bestehend aus einer Bisphenol-A-basierten ersten Komponente und einem Diamin-basierten Härter, einem Verdünner (MIBK) und Ruß als Füllstoff enthält. Das Lacksystem wird jedoch nicht mit Nahinfrarot-Strahlung ausgehärtet.

Diese Aufgabe wird gelöst durch die Verwendung eines Lacksystems, durch ein Verfahren sowie durch eine Linse gemäß den unabhängigen Ansprüchen.

Die vorliegende Erfindung betrifft die Verwendung eines Lacksystems zum Erzeugen einer Beschichtung auf einem Rand einer Linse, wobei das Lacksystem zumindest eine erste Komponente und eine zweite Komponente umfasst und durch Bestrahlung mit Licht einer Wellenlänge im Bereich von 0,7 µm bis 1,4 µm aushärtbar ist; wobei die erste Komponente zumindest eine Harzkomponente ausgewählt aus der Gruppe bestehend aus Epoxidharz, Acrylharz sowie Mischungen davon, zumindest einen Verdünner in Form eines organischen Lösungsmittels und zumindest einen oder mehrere Füllstoffe umfasst, wobei in der ersten Komponente der Gehalt des zumindest einen Epoxidharzes und/oder zumindest einen Acrylharzes 20 bis 65 Gew.-% beträgt, bezogen auf das Gesamtgewicht der ersten Komponente, der Gehalt des Verdünners 5 bis 70 Gew.-% beträgt, bezogen auf das Gesamtgewicht der ersten Komponente und der Gehalt an Füllstoff 2 Gew.-% oder mehr beträgt, bezogen auf das Gesamtgewicht der ersten Komponente; und wobei die zweite Komponente zumindest einen Vernetzer umfasst, der ausgewählt ist aus der Gruppe bestehend aus aliphatischen Isocyanaten, aromatischen Isocyanaten, Verbindungen mit Aminogruppen sowie Mischungen davon.

Außerdem betrifft die vorliegende Erfindung ein Verfahren zum Beschichten eines Randes einer Linse, umfassend Schritt (A): Auftragen eines Lacksystems auf einen Rand der zu beschichtenden Linse, wobei das Lacksystem zumindest eine erste Komponente und eine zweite Komponente umfasst; und durch Bestrahlung mit Licht einer Wellenlänge im Bereich von 0,7 bis 1,4 µm aushärtbar ist; wobei die erste Komponente zumindest eine Harzkomponente ausgewählt aus der Gruppe bestehend aus Epoxidharz, Acrylharz sowie Mischungen davon, zumindest einen Verdünner in Form eines organischen Lösungsmittels und zumindest einen oder mehrere Füllstoffe umfasst, wobei in der ersten Komponente der Gehalt des zumindest einen Epoxidharzes und/oder zumindest einen Acrylharzes 20 bis 65 Gew.-% beträgt, bezogen auf das Gesamtgewicht der ersten Komponente, der Gehalt des Verdünners 5 bis 70 Gew.-% beträgt, bezogen auf das Gesamtgewicht der ersten Komponente und der Gehalt an Füllstoff 2 Gew.-% oder mehr beträgt, bezogen auf das Gesamtgewicht der ersten Komponente; und wobei die zweite Komponente zumindest einen Vernetzer umfasst, der ausgewählt ist aus der Gruppe bestehend aus aliphatischen Isocyanaten, aromatischen Isocyanaten, Verbindungen mit Aminogruppen sowie Mischungen davon; sowie Schritt (B): Aushärten des Lacksystems durch Bestrahlen mit Licht mit einer Wellenlänge im Bereich von 0,7 bis 1,4 µm.

Zudem betrifft die vorliegende Erfindung auch eine Linse mit einer Randlackbeschichtung erhältlich durch die erfindungsgemäße Verwendung eines Lacksystems und/oder erhältlich durch das erfindungsgemäße Verfahren.

Durch die erfindungsgemäße Verwendung eines Lacksystems lassen sich Linsen deutlich kostengünstiger herstellen als mit herkömmlichen Lacksystemen. Bereits nach kurzer Zeit liegt eine ausreichende Haftfähigkeit, eine sehr gute Lösemittelbeständigkeit, eine hohe UV-Beständigkeit, eine hohe Beständigkeit gegenüber warmen und kalten Temperaturen sowie gegenüber Temperaturwechseln und auch gegenüber feuchter Wärme, künstlichem Handschweiß, kosmetischen Grundstoffen und Salz vor. Bei der erfindungsgemäßen Verwendung des Lacksystems ist es möglich, dass mittels Bestrahlung von Licht im nahen Infrarotbereich das Lacksystem binnen Sekunden von innen nach außen aushärtet, ohne dass es zu einer Hautbildung kommt. Aufgrund der schnellen Aushärtung können die beschichteten Linsen direkt einem weiteren Prozessschritt zugeführt werden. Die Beständigkeit gegenüber Lösungsmitteln (Ethanol, Aceton / 10 Zyklen mit befeuchteten "Cotton bud"), UV-Strahlung (96h 500 DIN ISO 9022-20-03-1), Kälte (16h -40°C DIN ISO 9022-10-08-1), Wärme (16h 70°C/6h 85°C DIN ISO 9022-11-05-1), raschen Temperaturwechseln (-25°C / 40°C 5 Zyklen DIN ISO 9022-15-02-1), feuchter Wärme (21d 40°C 95-98% rF DIN ISO 9022-12-04-1), künstlichem Handschweiß (7d DIN ISO 9022-86-02-1), kosmetischen Grundstoffen (7d 9022-86-02-1) und einem Salzsprühtest (24h DIN ISO 9022-4 Art. 40) ist durch die erfindungsgemäße Verwendung eines Lacksystems sowie durch das erfindungsgemäße Verfahren bei einer erfindungsgemäßen Linse gegeben. Das Lacksystem haftet auf Glasoberflächen mit einer Oberflächenrauheit Rₘₐₓ von 1 bis 3 µm so gut, dass ein Gitterschnitttest einen Wert von GT=0 ergibt. Der Gitterschnitttest wird durchgeführt gemäß DIN EN ISO 2409:2013. Die Oberflächenrauheit wird bestimmt gemäß DIN EN ISO 25178. Mit einer Oberflächenrauheit Rₘₐₓ im Bereich von 1 bis 3 µm lässt sich außerdem in Kombination mit der erfindungsgemäßen Verwendung eines Lacksystems ein besonders gutes Anfließen des Lackes erreichen und die Streulichtminimierung besonders vorteilhaft erzielen.

Wenn hierin Licht im nahen Infrarotbereich (NIR) genannt ist, ist Licht gemeint, dass ein Wellenlängenmaximum im Bereich von 0,7 bis 1,4 µm aufweist. Bevorzugt liegt das Wellenlängenmaximum des NIR Lichts im Bereich von 0,7 bis 1,2 µm.

Es sei angemerkt, dass die erste und die zweite Komponente getrennt voneinander sein können, dies jedoch nicht zwangsläufig gegeben sein muss. Dies bedeutet, dass die Komponenten nicht getrennt voneinander vorliegen müssen, sondern auch miteinander vermischt aufbewahrt werden können. Sofern die Komponenten miteinander vermischt aufbewahrt sind, ist lediglich darauf zu achten, dass keine unerwünschte vorzeitige Aushärtung des Lacksystems auftritt, beispielsweise durch zu hohe Temperaturen oder Bestrahlung mit Licht. Aus Gründen der einfacheren Lagerung und der Haltbarkeit kann es daher vorteilhaft sein, die Komponenten getrennt voneinander aufzubewahren.

Bevorzugte Weiterbildungen der Erfindung sind in den abhängigen Ansprüchen sowie im Folgenden widergegeben. Es versteht sich, dass die nachfolgend beschriebenen bevorzugten Weiterbildungen der Erfindung miteinander und insbesondere mit den Merkmalen der Ansprüche beliebig kombinierbar sind. Die hierbei möglichen Merkmalskombinationen sind alle als bevorzugte Ausführungsformen der vorliegenden Erfindung anzusehen. Es versteht sich außerdem, dass sämtliche Aspekte, die in den Ansprüchen oder der folgenden Beschreibung genannt sind, sich sowohl auf die erfindungsgemäße Verwendung als auch auf das erfindungsgemäße Verfahren beziehen, auch wenn nur die Verwendung oder nur das Verfahren ausdrücklich genannt sind. Gleiches gilt auch für die erfindungsgemäße Linse.

Sofern bei den hierin erwähnten Normen nicht angegeben ist welche Fassung gemeint ist, sind die zum 1. Oktober 2018 geltenden Fassungen gemeint.

Vorzugsweise enthalten die erste und/oder die zweite Komponente als Füllstoff zumindest einen schwarzen Füllstoff, insbesondere Ruß. Durch die Verwendung eines schwarzen Füllstoffs lässt sich eine Randlackbeschichtung auf einer Linse erzeugen, die besonders gut Licht im sichtbaren Bereich absorbiert, sodass Streulicht im Linsenzylinder verringert wird. Es ist besonders bevorzugt, wenn zumindest ein schwarzer Füllstoff, insbesondere Ruß, in der ersten Komponente enthalten ist. Höchst bevorzugt ist Ruß in der ersten Komponente enthalten. Ruß kann zusätzlich zur Absorption von Licht im sichtbaren Bereich auch die UV-Beständigkeit des Lacksystems erhöhen. Über die Menge an eingebrachtem schwarzen Füllstoff, insbesondere Ruß, kann die Absorption des Lichts gesteuert werden; eine zu hohe Menge an Ruß könnte dazu führen, dass nur die Oberfläche der Lackschicht erwärmt wird und keine homogene Aushärtung des Lacksystems erfolgt. In diesem Zusammenhang ist es bevorzugt, dass das Lacksystem 3 bis 18 Massenteile Ruß aufweist, bezogen auf 100 Massenteile des Feststoffgehalts des Lacksystems. Noch bevorzugter ist es, dass das Lacksystem 4 bis 16 Massenteile Ruß aufweist, bezogen auf 100 Massenteile des Feststoffgehalts des Lacksystems. 100 Massenteile des Feststoffgehalts des Lacksystems beziehen sich hierbei auf die Masse des Lacksystems ohne Verdünnung.

Weiter ist es bevorzugt, wenn das Lacksystem weder Kohlenteer noch Steinkohlenteerpech enthält, da Kohlenteer und Steinkohlenteerpech Stoffgemische aus verschiedenen Substanzen sind, wovon einige giftig, krebserregend oder umweltschädlich sind. Es ist daher besonders bevorzugt, wenn das Lacksystem lediglich Ruß als schwarzen Füllstoff enthält.

Vorzugsweise enthält die erste und/oder die zweite Komponente zumindest einen weißen Füllstoff, insbesondere Kieselsäure und/oder Bariumsulfat. Durch die Verwendung eines weißen Füllstoffs lässt sich das Streulicht weiter reduzieren. Es ist besonders bevorzugt, wenn zumindest ein weißer Füllstoff, insbesondere Kieselsäure und/oder Bariumsulfat, in der ersten Komponente enthalten ist. Besonders bevorzugt ist eine Kombination von Kieselsäure und Bariumsulfat in der ersten Komponente enthalten. Ein zu hoher Anteil an weißem Füllstoff könnte dazu führen, dass das Licht zum Aushärten nicht in tiefere Schichten eindringt. In diesem Zusammenhang ist es bevorzugt, dass das Lacksystem 4 bis 28 Massenteile weißen Füllstoff aufweist, bezogen auf 100 Massenteile des Feststoffgehalts des Lacksystems. Noch bevorzugter ist es, dass das Lacksystem 6 bis 20 Massenteile weißen Füllstoff aufweist, bezogen auf 100 Massenteile des Feststoffgehalts des Lacksystems. 100 Massenteile des Feststoffgehalts des Lacksystems beziehen sich hierbei auf die Masse des Lacksystems ohne Verdünnung.

Zumindest ein weißer und zumindest ein schwarzer Füllstoff sind bevorzugt in der ersten Komponente enthalten. Hierdurch lässt sich eine schwarze und gleichzeitig matte Randlackbeschichtung erzielen, welche besonders vorteilhaft ist bezüglich der Verringerung von Streulicht in einem Linsenzylinder. Wie oben beschrieben ist der weiße Füllstoff bevorzugt Kieselsäure und/oder Bariumsulfat, höchst bevorzugt Kieselsäure und Bariumsulfat und der schwarze Füllstoff ist bevorzugt Ruß.

Es ist zudem bevorzugt, wenn das Lacksystem nach dem Aushärten einen Glanzgrad bei 60° von kleiner oder gleich 12, noch bevorzugter von kleiner oder gleich 10 aufweist. Der Glanzgrad wird bestimmt nach DIN EN ISO 2813:2015-02. Ein Lacksystem mit einem solchen Glanzgrad unterstützt die Verringerung von Streulicht in einem Linsenzylinder.

Zudem ist es bevorzugt, dass die erste Komponente als Harzkomponente ein Epoxidharz umfasst. Das Epoxidharz ist besonders bevorzugt ein halogenfreies Epoxidharz, d.h. ein Epoxidharz, in welchem der Halogengehalt bezogen auf das Gewicht des Epoxidharzes unter 5 Gew.-%, bevorzugt unter 1 Gew.-% liegt. Zusätzlich zu dem Epoxidharz können auch noch andere Harzkomponenten, insbesondere Acrylharze, in der ersten Komponente enthalten sein. Dennoch kann es bevorzugt sein, lediglich ein Epoxidharz als Harzkomponenten zu verwenden.

Es ist außerdem bevorzugt, wenn in der ersten Komponente der Gehalt des zumindest einen Epoxidharzes und/oder des zumindest einen Acrylharzes 25 bis 50 Gew.-% beträgt, bezogen auf das Gesamtgewicht der ersten Komponente. Zudem ist es bevorzugt, wenn der Gehalt des Verdünners 10 bis 60 Gew.-% beträgt, bezogen auf das Gesamtgewicht der ersten Komponente. Außerdem ist es bevorzugt, wenn der Gehalt an Füllstoff 10 Gew.-% oder mehr beträgt. Der Fachmann versteht, dass die angegebenen bevorzugten Bereiche für den Gehalt an Epoxid-harz und/oder zumindest einem Acrylharz, für den Gehalt des Verdünners und für den Gehalt an Füllstoff miteinander kombinierbar sind. Es folgt daraus, dass es besonders bevorzugt ist, wenn in der ersten Komponente des Lacksystems der Gehalt des zumindest einen Epoxidharzes und/oder zumindest einen Acrylharzes 25 bis 50 Gew.-% beträgt, bezogen auf das Gesamtgewicht der ersten Komponente, der Gehalt des Verdünners 10 bis 60 Gew.-% beträgt, bezogen auf das Gesamtgewicht der ersten Komponente und der Gehalt an Füllstoff 10 Gew.-% oder mehr beträgt, bezogen auf das Gesamtgewicht der ersten Komponente. Jedoch ist klar, dass auch die Kombination des angegebene bevorzugten Bereichs für den Gehalt an Epoxidharz und/oder Acrylharz mit den bevorzugten und allgemeineren Bereichen für den Gehalt an Verdünnung und für den Gehalt an Füllstoff in Kombination offenbart ist. Gleiches gilt sinngemäß auch für die bevorzugten Bereiche für den Gehalt an Verdünnung und für den Gehalt an Füllstoff.

Außerdem ist es bevorzugt, wenn in der ersten Komponente keine aromatischen Lösungsmittel enthalten sind und die Verdünnung in der ersten Komponente zumindest einen Ester umfasst. Mit einer Ester-basierten Verdünnung lässt sich eine Randlackbeschichtung mit den oben genannten erwünschten Eigenschaften realisieren. Es ist daher besonders bevorzugt, dass die Verdünnung zumindest einen Ester enthält.

Zusätzlich zu den oben genannten bevorzugten Aspekten ist es bevorzugt, dass die erste Komponente wenigstens ein Polymer mit sauren Gruppen umfasst. Ein solches Polymer mit sauren Gruppen kann als Dispergiermittel wirken und eine Dispersion fester Bestandteile in dem Lacksystem, wie beispielsweise Füllstoffe, stabilisieren, sodass eine gleichmäßige Randlackbeschichtung erzielt wird.

Um eine gleichmäßige Randlackbeschichtung zu erzielen, wird bei der erfindungsgemäßen Verwendung bevorzugt ein Lacksystem eingesetzt, dessen dynamische Viskosität 300 bis 3000 mPa·s bei 25 °C beträgt. Noch bevorzugter ist es, wenn die dynamische Viskosität des Lacksystems im Bereich von 400 bis 1500 mPa·s bei 25 °C liegt. Noch weiter bevorzugt ist es, wenn die dynamische Viskosität des Lacksystems im Bereich von 500 bis 1100 mPa·s bei 25 °C liegt. Die hierin erwähnte dynamische Viskosität wird gemessen nach DIN EN ISO 2884-1:2006-09. Ein Lacksystem mit einer dynamischen Viskosität, wie oben angegeben, verläuft homogen und glatt, ohne dass eine nennenswerte Kantenflucht auftritt, d.h. die Beschichtung ist an Kanten nicht wesentlich dünner als auf einer Fläche. Ein Lacksystem mit einer dynamischen Viskosität im genannten Bereich lässt sich in Dicken im Bereich von 1 µm bis 30 µm homogen in IT-6 Qualität nach DIN ISO 256-1 auftragen.

Das Lacksystem zur erfindungsgemäßen Verwendung ist durch Pinsel, Schwamm oder durch Sprühen auf eine Linse auftragbar. Ein besonders geeignetes Mittel zum Auftragen ist ein keilförmiger lösemittelbeständiger Schwammstoff. Die Aushärtung ist sowohl bei Raumtemperatur als auch bei Wärme möglich. Es hat sich jedoch in Anbetracht geringer Prozesszeiten und damit verbundener Kosten als voreilhaft gezeigt, wenn das Lacksystem durch Bestrahlen mit Licht aus dem nahen Infrarotbereich (NIR) ausgehärtet wird. In diesem Zusammenhang ist es insbesondere bevorzugt, dass die Beschichtung auf dem Rand der Linse durch Bestrahlung mit Licht aus dem nahen Infrarotbereich (NIR) ausgehärtet wird. Durch Bestrahlung mit Licht aus dem nahen Infrarotbereich wird ein hoher Energieeintrag erreicht. Dieser hohe Energieeintrag führt dazu, dass die Vernetzung des Lacksystems anders als bei einer konventionellen Konvektionshärtung (kurzkettig / langkettig) erfolgt. Im Gegensatz zur Konvektionsaushärtung ist die Aushärtung durch NIR Strahlung kurzkettiger, d.h. es sind im Durchschnitt kürzere Kettensegmente zwischen zwei Vernetzungspunkten vorhanden als bei der Konvektionsaushärtung. Als Resultat ist die Lackstabilität gegenüber Lösemitteln z.B. Aceton durch den NIR-Prozess verbessert.

Bei dem erfindungsgemäßen Verfahren ist es bevorzugt, dass das Bestrahlen in Schritt (B) für einen Zeitraum von weniger als 5 Minuten durchgeführt wird. Die Bestrahlung in Schritt (B) kann sehr schnell durchgeführt werden, sodass bereits nach kürzester Zeit, beispielsweise 1 Sekunde, eine ausreichende Aushärtung des Lacksystems und die oben genannten Eigenschaften erreicht werden. Prinzipiell ist auch eine Bestrahlung über einen längeren Zeitraum als 5 Minuten möglich, jedoch nicht wirtschaftlich sinnvoll und es erhöht sich das Risiko, die Linse zu sehr zu erhitzen, sodass es zu einer Beschädigung kommen kann. Zudem erhöht sich das Risiko, dass es zu einer Überhärtung und einem Verbrennen des Lackes kommt, wodurch die Eigenschaften des ausgehärteten Lacksystems verschlechtern. In diesem Zusammenhang ist eine Bestrahlung von weniger als 3 Minuten bevorzugter und von weniger als 2 Minuten noch bevorzugter und von weniger als 1 Minute höchst bevorzugt. Eine Bestrahlung von 1 Sekunde oder länger ist bevorzugt, von 5 Sekunden oder länger noch bevorzugter und von 15 Sekunden oder länger noch weiter bevorzugt, um eine ausreichende Aushärtung des Lacksystems Sicherzustellen. Es sei angemerkt, dass die genannten Untergrenzen von 1 Sekunde, 5 Sekunden und 15 Sekunden mit den genannten Obergrenzen von 5 Minuten, 3 Minuten, 2 Minuten und 1 Minute als in beliebiger Kombination offenbart anzusehen sind.

Ein Aushärteprozess, der die Leistungen der NIR-Strahler über eine Rampe hochfährt, hat sich als besonders vorteilhaft erwiesen, insbesondere bei thermisch empfindlichen Substraten, wie beispielsweise dem Glas S-FPL51. Der Einsatz von sehr "empfindlichen" optischen Gläsern, ist in der optischen Industrie mittlerweile Standard und erschwert einen über NIR-Strahlung aushärtenden Lackierprozess (Verspannungen / chemische Beständigkeiten, Glashärte, Wärmeausdehnungskoeffizient, Wärmeleitfähigkeit, usw.). Bei einem solchen Aushärteprozess wird zunächst mit einer Leistung des NIR-Strahlers bestrahlt, die nicht der Maximalleistung entspricht, beispielsweise 70% oder weniger der Maximalleistung. Anschließend wird mit einer höheren Leistung des NIR-Strahlers als zuvor bestrahlt. Die Erhöhung der Leistung des NIR Strahlung kann entweder kontinuierlich erfolgen oder es kann erst ein erster Bestrahlungsschritt bei einer konstanten Leistung des NIR-Strahlers erfolgen, gefolgt von zumindest einem weiteren Bestrahlungsschritt bei einer höheren Leistung des NIR Strahlers. Zwischen zwei aufeinanderfolgenden Bestrahlungsschritten kann eine Pause liegen, währenddessen keine Bestrahlung vorgenommen wird, sodass die Bestrahlung gepulst erfolgt. Eine derartige gepulste Bestrahlung kann vorteilhaft sein, damit sich das Substrat, beispielsweise ein wärmeempfindliches Glas, nicht übermäßig und auch nicht übermäßig schnell erhitzt, wodurch das Entstehen von starken Verspannungen im Glas vermieden werden kann. Die Dauer des jeweiligen Bestrahlungsschritts bzw. die Pulsdauer kann dabei beispielsweise im Bereich von 1 bis 5 Sekunden liegen.

Beim gepulsten Bestrahlen kann die Bestrahlung in einem ersten Bestrahlungsschritt auch gleich sein, wie in einem nachfolgenden Bestrahlungsschritt. Bevorzugt ist zwischen zwei aufeinanderfolgenden Bestrahlungsschritten eine Pause von 1 bis 5 Sekunden vorgesehen.

Es ist bevorzugt, wenn die Linse in Verfahrensschritt (B) mit einer Leistung pro Flächeneinheit von 250 bis 600 kW/m² bestrahlt wird.

Ferner ist es bevorzugt, dass in Schritt (A) das Lacksystem mit einer Schichtdicke von 1 bis 50 µm aufgetragen wird. Ein Auftragen einer Schichtdicke von 1 bis 50 µm ermöglicht ein schnelles Aushärten und gleichzeitig eine homogene und blickdichte Randlackbeschichtung auf der Linse. In diesem Zusammenhang ist es besonders bevorzugt, wenn die Schichtdicke 2 bis 25 µm, noch bevorzugter 2 bis 15 µm, beträgt.

Bei dem erfindungsgemäßen Verfahren ist es zudem bevorzugt, bereits vor dem Aushärten eine Schichtdickenmessung des Lacksystems vorzunehmen. Hierdurch kann eine homogene und blickdichte Randlackbeschichtung der Linse sichergestellt werden und der produzierte Ausschuss verringert werden. Die Messung der Schichtdicke kann beispielsweise durch ein Laser-gestütztes Messsystem mit Infrarotsensoren erfolgen. Die Schichtdickenmessung erfolgt bevorzugt mittels Laser-Photothermal-Radiometrie. Eine Möglichkeit zur Messung der Schichtdicke ist beispielsweise in der internationalen Patentanmeldung WO 2015/001210 A1 offenbart, deren Inhalt hiermit durch Bezugnahme eingefügt ist.

Ferner ist es bevorzugt, dass das Bestrahlen in Schritt (B) durch zumindest einen NIR-Strahler, der Licht mit einem Wellenlängenmaximum im Bereich von 0,7 bis 1,4 µm aufweist, vorgenommen wird. Bevorzugter ist das Wellenlängenmaximum im Bereich von 0,7 µm bis 1,2 µm, höchst bevorzugt ist das Wellenlängenmaximum im Bereich von 0,85 µm bis 0,95 µm.

Um ein Überhitzen der Linse zu vermeiden, ist es bevorzugt, dass während des Bestrahlens mit Licht mit einer Wellenlänge im Bereich von 0,7 µm bis 1,4 µm die Linse gekühlt wird. Durch Einsatz einer Kühlung kann verhindert werden, dass Spannungen in der Linse auftreten, wodurch auch die Beschichtung temperaturempfindlicher Linsen möglich ist. Bevorzugt erfolgt die Kühlung durch Druckluft, beispielsweise durch Einsatz einer Fächerdüse, wodurch ein sogenannter Kühlvorhang gebildet wird. In diesem Zusammenhang ist es außerdem bevorzugt, wenn zumindest während des Bestrahlens, gegebenenfalls auch nur während des Bestrahlens, die Temperatur der Linse gemessen wird, z.B. über ein oder mehrere Pyrometer. Ein Beispiel für Pyrometer sind Wärmebildkameras, es können jedoch auch andere Pyrometer verwendet werden. Die Temperaturmessung kann genutzt werden, um festzustellen, dass der Beschichtungsprozess wie geplant abläuft. Man kann die Information über die Temperatur der Linse aber auch nutzen, um die Leistung der NIR-Strahler, die Kühlung oder die Rotation der Linse zu steuern. Ein gleichmäßiges Aushärten des Lacks lässt sich erreichen, indem die Linse während der Durchführung des Schritts (B) relativ zu einer Lichtquelle, die Licht mit einer Wellenlänge im Bereich von 0,7 µm bis 1,4 µm emittiert, rotiert. Besonders bevorzugt ist es, wenn die Linse um eine Rotationsachse rotiert. Als bevorzugte Drehzahl hat sich während Schritt (B) eine Drehzahl von 150 - 350 U/min, als besonders bevorzugt von 200 - 250 U/min, erwiesen. Zudem ist es bevorzugt, dass auch in Schritt (A) die Linse rotiert, um ein gleichmäßiges Auftragen des Lacksystems zu vereinfachen. In Schritt (A) beträgt die Drehzahl bevorzugt 200 bis 400 U/min, besonders bevorzugt 300-350 U/min.

Die Linse ist aus einem transparenten Material, bevorzugt aus Glas.

Nachfolgend wird die Erfindung beispielhaft unter Bezugnahme auf die beigefügten Figuren beschrieben. Es zeigen, jeweils schematisch:
- Fig. 1: einen Querschnitt durch eine erfindungsgemäßen Linse,
- Fig. 2: eine Apparatur zur Ausführung des erfindungsgemäßen Verfahrens.

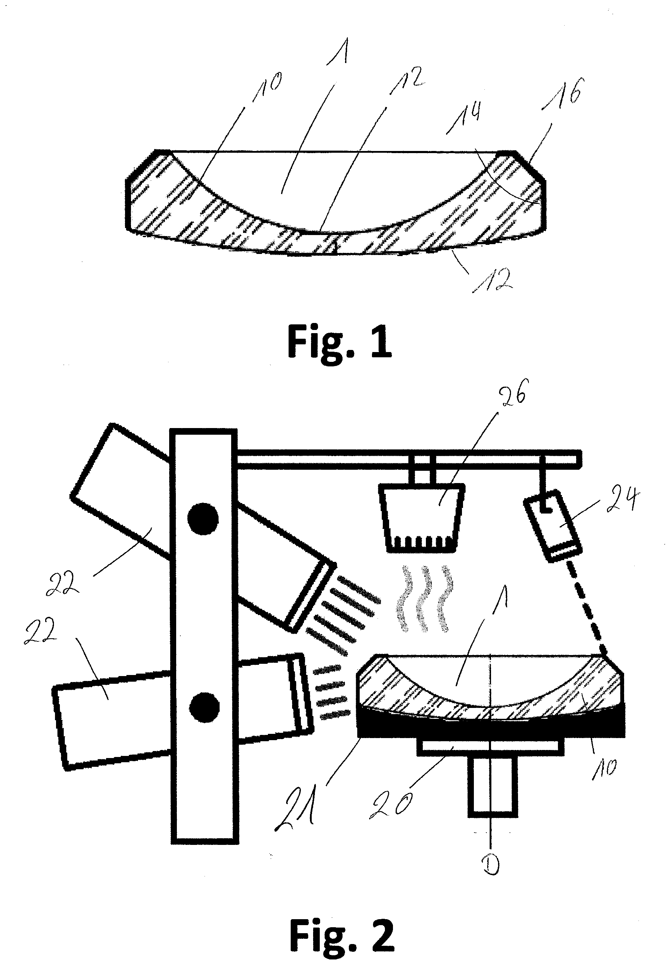

In Fig. 1 ist eine Linse 1 schematisch dargestellt, deren transparenter Körper 10 gewölbte Flächen 12 aufweist, die durch eine Kante bzw. einen Rand 14 begrenzt sind. Auf dem Rand 14 ist eine Randlackbeschichtung 16 aufgebracht. Die Randlackbeschichtung 16 ist in der Lage, Streulicht an dem Rand der Linse 1 zu minimieren.

Eine Apparatur zur Durchführung des erfindungsgemäßen Verfahrens zum Beschichten des Randes 14 ist schematisch in Fig. 2 dargestellt. Die in Fig. 2 gezeigte Apparatur weist zunächst eine Halterung 20 für die in Fig. 1 dargestellte Linse 1 auf. Die Halterung 20 ist um eine Achse D drehbar gelagert und ist beispielsweise aus Metall gefertigt. Auf der Halterung 20 ist ein Adapter 21 vorgesehen, der eine Oberfläche aufweist, die passend zu einer Linsenoberfläche gewölbt ist. Dieser Adapter kann beispielsweise aus einem Kunststoff, wie PEEK, gefertigt sein. Die Apparatur weist ferner Mittel auf, um ein Lacksystem zur Erzeugung der Randlackbeschichtung 16 aufzubringen. Diese Mittel sind in Fig. 2 jedoch nicht dargestellt. Darüber hinaus sind bei der in Fig. 2 gezeigten Apparatur zwei NIR-Strahler 22 vorgesehen, die NIR-Strahlung in Richtung des Randes 14 der Linse 1 ausstrahlen, um das aufgebrachte Lacksystem auszuhärten, während die Linse um die Achse D gedreht wird. Über ein Pyrometer 24 lässt sich die Temperatur der Linsen 1 während des Bestrahlens mit den NIR-Strahlern 22 überwachen. Die Kühlvorrichtung 26 kann, falls erforderlich, den Körper 10 der Linse 1 kühlen, in dem dieser zum Beispiel mit Druckluft angeblasen wird.

Nachfolgend wird die Erfindung anhand von Beispielen näher erläutert, welche jedoch nicht als einschränkend zu verstehen sind.

Ein zur erfindungsgemäßen Verwendung geeignetes Lacksystem kann eine Zusammensetzung aufweisen, wie in der nachfolgenden Tabelle 1 angegeben.

Die in Tabelle 1 gezeigten Komponenten wurden in den angegebenen Mengen gemischt und anschließend auf einen Rand einer Linse aus Glas mit einer Oberflächenrauheit Rₘₐₓ von 1 bis 3µm aufgetragen. Die Aushärtung erfolgte durch Bestrahlung mit NIR-Licht mit einem Wellenlängenmaximum von 0,9 µm und einer Bestrahlungsstärke von 450 kW/m².

Die Beständigkeit gegenüber Lösungsmitteln (Ethanol, Aceton / 10 Zyklen mit befeuchteten "Cotton bud"), UV-Strahlung (96h 500 DIN ISO 9022-20-03-1), Kälte (16h -40°C DIN ISO 9022-10-08-1), Wärme (16h 70°C/6h 85°C DIN ISO 9022-11-05-1), raschem Temperaturwechsel (-25°C / 40°C 5 Zyklen DIN ISO 9022-15-02-1), feuchter Wärme (21d 40°C 95-98% rF DIN ISO 9022-12-04-1), künstlichem Handschweiß (7d DIN ISO 9022-86-02-1), kosmetischen Grundstoffen (7d 9022-86-02-1) und einem Salzsprühtest (24h DIN ISO 9022-4 Art. 40) wurde nach dem Aushärten untersucht und durch die Lacksysteme der Beispiele 1 bis 4 erfüllt.

Es sind prinzipiell alle in den Beispielen angegebenen Lacksysteme geeignet, um eine gleichmäßige Kanten- bzw. Randlackbeschichtung herzustellen. Jedoch sind für das Lacksystem gemäß Beispiel 1 die Beständigkeit gegenüber Lösungsmitteln UV-Strahlung, Kälte, Wärme, raschem Temperaturwechsel, feuchter Wärme, künstlichem Handschweiß, kosmetischen Grundstoffen und einem Salzsprühtest am vorteilhaftesten ausgeprägt.

Ein beispielhaftes Bestrahlungsschema, mit welchem sich temperaturempfindliche Gläser besonders gut beschichten lassen, ist nachfolgend tabellarisch dargestellt.

| Strahler an | Strahler aus | Leistung |
|---|---|---|
| 1s | 3s | 50% |
| 1s | 3s | 70% |
| 3s | 3s | 90% |
| 3s | 3s | 90% |
| 3s | 3s | 90% |

Bei obiger Darstellung des Bestrahlungsschemas entspricht eine Leistung von 100% einer Bestrahlungsstärke von 450 kW/m² (Maximalleistung des NIR Strahlers). Zunächst wird eine Bestrahlung mit 50% der Maximalleistung des NIR Strahlers für 1 Sekunde vorgenommen, bevor die Bestrahlung für 3 Sekunden pausiert. Anschließend wird mit 70% der Maximalleistung des NIR Strahlers für 1 Sekunde bestrahlt, bevor die Bestrahlung erneut für 3 Sekunden pausiert. Danach wird dreimal mit 90% der Maximalleistung des NIR Strahlers für 3 Sekunde bestrahlt, wobei nach jedem Bestrahlungsschritt die Bestrahlung für 3 Sekunden pausiert.

**Tabelle 1:**

| Bestandteil | Beispiel 1 | Beispiel 2 | Beispiel 3 | Beispiel 4 |
|---|---|---|---|---|
| Erste Komponente, Mengenangaben in Gew.-% | 25-36 % Epoxidharz *1 | 20-40% MMA Harz *6 | 45-50% Acrylharz *10 | 17-36 % Epoxidharz *1 |
| | 1-20% Propylmethylacetat | 15-35% Vinylacetat *7 | 10-25% Propylenglycoldiacetat | 1-20% Propylmethylacetat |
| | 10-30% Ethoxypropylacetat | 15-25% Xylol | 5-15% Bariumsulfat *2 | 10-30% Butylglycoalcetat |
| | 5-15% Bariumsulfat *2 | 10-20 % Methylisobutylketon | 5-10% Ruß *3 | 5-15% Bariumsulfat *2 |
| | 5-10% Ruß *3 | 5 % *8 Weichmacher | 1-5% Kieselsäure *11 | 5-10% Ruß *3 |
| | 3-6 % Kieselsäure *4 | 2-5% Ruß *3 | 2.5% (3-Glycidyloxy-propyl)trimethoxysilan | 3-6 % Kieselsäure *4 |
| | 2 % Dispergiermittel *5 | 1.5 % Dispergiermittel *5 | 1.5 % Dispergiermittel *5 | 2 % Dispergiermittel *5 |
| | | 1-2% Fließmittel *9 | 1-2% Fließmittel *9 | |
| | | 0.05% Dibutylzinnlaurat | 0.05% Dibutylzinnlaurat | |
| Zweite Komponente | aliphatisches Isocyanat *12 oder aminischer Härter *13 | aromatisches Isocyanat *14 | aliphatisches Isocyanat *12 | aminischer Härter *13 |
| Erste Komponente : Zweite Komponente | 100:10 | 100:20 | 100:10 | 100:20 |

| | | | | |
|---|---|---|---|---|
| *1 bis *14 sind nachfolgend näher erläutert Erläuterung zu *1 bis *14 in Tabelle 1: *1 Bisphenol-A basiertes Epoxidharz Araldit GT 7004, erhältlich von Jubail Chemical Industries Company *2 Blanc Fixe N, erhältlich von Solvay S.A. *3 color black fw 200, erhältlich von Orion Engineered Carbons *4 Aerosil 200, erhältlich von Evonik *5 Disperbyk 180, erhältlich von BYK-CHEMIE GMBH *6 Degalan 560, erhältlich von Evonik *7 Vinnapas 5010 N, erhältlich von Wacker Chemie AG *8 1,2-Cyclohexandicabonsäurediisononylester *9 Polyether modified polysiloxane, Borchi Gol OL 17, erhältlich von Borchers GmbH *10 Setalux 1122, erhältlich von Allnex Netherlands B.V. *11 Aerosil R972, erhältlich von Evonik *12 Desmodur N75, erhältlich von Covestro *13 Versamin M1, erhältlich von Gabriel Performance Products, LLC *14 Desmodur E17, erhältlich von Covestro | | | | |

### Bezugszeichen:

- 1: Linse
- 10: Körper
- 12: gewölbte Fläche
- 14: Rand
- 16: Randlackbeschichtung
- 20: Halterung
- 21: Adapter
- 22: NIR-Strahler
- 24: Pyrometer
- 26: Kühlvorrichtung

- D: Achse

## Patentansprüche

1. Verwendung eines Lacksystems zum Erzeugen einer Randlackbeschichtung (16) auf einem Rand (14) einer Linse (1),
wobei das Lacksystem zumindest eine erste Komponente und eine zweite Komponente umfasst und durch Bestrahlung mit Licht einer Wellenlänge im Bereich von 0,7 bis 1,4 µm aushärtbar ist;
wobei die erste Komponente zumindest eine Harzkomponente ausgewählt aus der Gruppe bestehend aus Epoxidharz, Acrylharz sowie Mischungen davon, zumindest einen Verdünner in Form eines organischen Lösungsmittels und zumindest einen oder mehrere Füllstoffe umfasst,
wobei in der ersten Komponente der Gehalt des zumindest einen Epoxidharzes und/oder zumindest einen Acrylharzes 20 bis 65 Gew.-% beträgt, bezogen auf das Gesamtgewicht der ersten Komponente,
der Gehalt des Verdünners 5 bis 70 Gew.-% beträgt, bezogen auf das Gesamtgewicht der ersten Komponente und
der Gehalt an Füllstoff 2 Gew.-% oder mehr beträgt, bezogen auf das Gesamtgewicht der ersten Komponente; und
wobei die zweite Komponente zumindest einen Vernetzer umfasst, der ausgewählt ist aus der Gruppe bestehend aus aliphatischen Isocyanaten, aromatischen Isocyanaten, Verbindungen mit Aminogruppen sowie Mischungen davon.

2. Verwendung nach Anspruch 1,
wobei die erste und/oder die zweite Komponente als Füllstoff zumindest einen schwarzen Füllstoff umfasst, insbesondere Ruß.

3. Verwendung nach Anspruch 1 oder 2,
wobei die erste und/oder die zweite Komponente zumindest einen weißen Füllstoff umfasst, insbesondere Kieselsäure und/oder Bariumsulfat.

4. Verwendung nach zumindest einem der vorstehenden Ansprüche,
wobei die erste Komponente als Harzkomponente ein Epoxidharz umfasst.

5. Verwendung nach zumindest einem der vorstehenden Ansprüche,
wobei in der ersten Komponente keine aromatischen Lösungsmittel enthalten sind und die Verdünnung in der ersten Komponente zumindest einen Ester umfasst.

6. Verwendung nach zumindest einem der vorstehenden Ansprüche,
wobei die erste Komponente wenigstens ein Polymer mit sauren Gruppen umfasst.

7. Verwendung nach zumindest einem der vorstehenden Ansprüche,
wobei die dynamische Viskosität des Lacksystems 300 bis 3000 mPa·s gemessen nach DIN EN ISO 2884-1:2006-09 bei 25 °C beträgt.

8. Verfahren zum Beschichten eines Randes (14) einer Linse (1), umfassend
Schritt (A): Auftragen eines Lacksystems auf einen Rand der zu beschichtenden Linse,
wobei das Lacksystem ein Lacksystem zur Verwendung gemäß einem der Ansprüche 1 bis 7 ist; sowie
Schritt (B): Aushärten des Lacksystems durch Bestrahlen mit Licht mit einer Wellenlänge im Bereich von 0,7 µm bis 1,4 µm.

9. Verfahren nach Anspruch 8,
wobei das Bestrahlen in Schritt (B) für einen Zeitraum von weniger als 30 Minuten durchgeführt wird.

10. Verfahren nach Anspruch 8 oder 9,
wobei in Schritt (A) das Lacksystem mit einer Schichtdicke von 1 bis 50 µm aufgetragen wird.

11. Verfahren nach zumindest einem der Ansprüche 8 bis 10,
wobei vor dem Aushärten eine Schichtdickenmessung des Lacksystems erfolgt.

12. Verfahren nach zumindest einem der Ansprüche 8 bis 11,
wobei das Bestrahlen in Schritt (B) durch zumindest einen NIR-Strahler, der Licht mit einem Wellenlängenmaximum im Bereich von 0,7 bis 1,4 µm aufweist, vorgenommen wird.

13. Verfahren nach zumindest einem der Ansprüche 8 bis 12,
wobei die Linse während des Bestrahlens mit Licht mit einer Wellenlänge im Bereich von 0,7 bis 1,4 µm gekühlt wird.

14. Verfahren nach zumindest einem der Ansprüche 8 bis 13,
wobei die Linse während der Durchführung des Schritts (B) relativ zu einer Lichtquelle, die Licht mit einer Wellenlänge im Bereich von 0,7 µm bis 1,4 µm emittiert, rotiert, und/oder
wobei das Bestrahlen in Schritt (B) gepulst durchgeführt wird.

15. Linse (1) mit einer Randlackbeschichtung (16) erhältlich durch Verwendung eines Lacksystems nach zumindest einem der Ansprüche 1 bis 7 und/oder erhältlich durch ein Verfahren nach zumindest einem der Ansprüche 8 bis 14.

## Claims

1. Use of a lacquer system for producing a lacquer edge coating (16) on an edge (14) of a lens (1),
wherein the lacquer system comprises at least one first component and one second component and can be hardened by irradiation with light of a wavelength in the range from 0.7 to 1.4 µm;
wherein the first component comprises at least one resin component selected from the group comprising epoxy resin, acrylic resin and mixtures thereof, at least one diluent in the form of an organic solvent, and at least one or more fillers;
wherein the content of the at least one epoxy resin and/or at least one acrylic resin in the first component amounts to 20 to 65 wt.% relative to the total weight of the first component;
the content of the diluent amounts to 5 to 70 wt.% relative to the total weight of the first component; and
the content of filler amounts to 2 wt.% or more relative to the total weight of the first component; and
wherein the second component comprises at least one crosslinking agent which is selected from the group comprising aliphatic isocyanates, aromatic isocyanates, compounds with amino groups and mixtures thereof.

2. Use in accordance with claim 1,
wherein the first and/or second component comprises/comprise at least one black filler, in particular carbon black, as the filler.

3. Use in accordance with claim 1 or claim 2,
wherein the first and/or second component comprises/comprise at least one white filler, in particular silica and/or barium sulfate.

4. Use in accordance with at least one of the preceding claims,
wherein the first component comprises an epoxy resin as the resin component.

5. Use in accordance with at least one of the preceding claims,
wherein no aromatic solvents are contained in the first component and the diluent in the first component comprises at least one ester.

6. Use in accordance with at least one of the preceding claims,
wherein the first component comprises at least one polymer having acid groups.

7. Use in accordance with at least one of the preceding claims,
wherein the dynamic viscosity of the lacquer system amounts to 300 to 3000 mPa·s measured in accordance with DIN EN ISO 2884-1:2006-09 at 25°C.

8. A method of coating an edge (14) of a lens (1),
comprising
step (A): applying a lacquer system to an edge of the lens to be coated, wherein the lacquer system is a lacquer system for use in accordance with any one of the claims 1 to 7; and
step (B): hardening the lacquer system by irradiation with light at a wavelength in the range from 0.7 µm to 1.4 µm.

9. A method in accordance with claim 8,
wherein the irradiation in step (B) is carried out for a time period of less than 30 minutes.

10. A method in accordance with claim 8 or claim 9,
wherein the lacquer system is applied with a layer thickness of 1 to 50 µm in step (A).

11. A method in accordance with at least one of the claims 8 to 10,
wherein a layer thickness measurement of the lacquer system takes place before hardening.

12. A method in accordance with at least one of the claims 8 to 11,
wherein the irradiation is carried out in step (B) by at least one NIR radiator which has light at a wavelength maximum in the range from 0.7 to 1.4 µm.

13. A method in accordance with at least one of the claims 8 to 12,
wherein the lens is cooled during the irradiation with light at a wavelength in the range from 0.7 to 1.4 µm.

14. A method in accordance with at least one of the claims 8 to 13,
wherein the lens is rotated relative to a light source which emits light at a wavelength in the range from 0.7 µm to 1.4 µm during the carrying out of step (B); and/or
wherein the irradiation is carried out in a pulsed manner in step (B).

15. A lens (1) having an edge lacquer coating (16) available by a use of a lacquer system in accordance with at least one of the claims 1 to 7 and/or available by a method in accordance with at least one of the claims 8 to 14.

## Revendications

1. Utilisation d'un système de vernis pour produire un revêtement de vernis de bord (16) sur un bord (14) d'une lentille (1),
dans laquelle
le système de vernis comprend au moins un premier composant et un second composant et est durcissable par irradiation avec une lumière ayant une longueur d'onde dans la plage de 0,7 à 1,4 µm ;
le premier composant comprend au moins un composant de résine choisi parmi le groupe constitué par la résine époxy, la résine acrylique ainsi que leurs mélanges, au moins un diluant sous la forme d'un solvant organique et au moins une ou plusieurs charges,
la teneur en ladite au moins une résine époxy et/ou en ladite au moins une résine acrylique dans le premier composant est de 20 à 65 % en poids, par rapport au poids total du premier composant,
la teneur en diluant est de 5 à 70 % en poids, par rapport au poids total du premier composant, et
la teneur en charge est de 2 % en poids ou plus, par rapport au poids total du premier composant ; et
le second composant comprend au moins un agent de réticulation choisi parmi le groupe constitué par les isocyanates aliphatiques, les isocyanates aromatiques, les composés ayant des groupes amino, et leurs mélanges.

2. Utilisation selon la revendication 1,
dans laquelle
le premier et/ou le second composant comprend comme charge au moins une charge noire, en particulier du noir de carbone.

3. Utilisation selon la revendication 1 ou 2,
dans laquelle
le premier et/ou le second composant comprend au moins une charge blanche, en particulier de la silice et/ou du sulfate de baryum.

4. Utilisation selon l'une au moins des revendications précédentes,
dans laquelle
le premier composant comprend comme composant de résine une résine époxy.

5. Utilisation selon l'une au moins des revendications précédentes,
dans laquelle
le premier composant ne comprend pas de solvants aromatiques et le diluant dans le premier composant comprend au moins un ester.

6. Utilisation selon l'une au moins des revendications précédentes,
dans laquelle
le premier composant comprend au moins un polymère ayant des groupes acides.

7. Utilisation selon l'une au moins des revendications précédentes,
dans laquelle
la viscosité dynamique du système de vernis est de 300 à 3000 mPa·s à 25 °C, mesurée selon la norme allemande DIN EN ISO 2884-1:2006-09.

8. Procédé de revêtement d'un bord (14) d'une lentille (1), comprenant
l'étape (A) : appliquer un système de vernis sur un bord de la lentille à revêtir,
le système de vernis étant un système de vernis pour utilisation selon l'une des revendications 1 à 7 ; et
l'étape (B) : faire durcir le système de vernis par irradiation avec de la lumière ayant une longueur d'onde dans la plage de 0,7 µm à 1,4 µm.

9. Procédé selon la revendication 8,
dans lequel l'irradiation dans l'étape (B) est effectuée pendant une période inférieure à 30 minutes.

10. Procédé selon la revendication 8 ou 9,
dans lequel, dans l'étape (A), le système de vernis est appliqué avec une épaisseur de couche de 1 à 50 µm.

11. Procédé selon l'une au moins des revendications 8 à 10,
dans lequel une mesure de l'épaisseur de la couche du système de vernis est effectuée avant le durcissement.

12. Procédé selon l'une au moins des revendications 8 à 11,
dans lequel l'irradiation dans l'étape (B) est effectuée par au moins un émetteur NIR présentant une lumière ayant un maximum de longueur d'onde dans la plage de 0,7 à 1,4 µm.

13. Procédé selon l'une au moins des revendications 8 à 12,
dans lequel la lentille est refroidie pendant l'irradiation avec une lumière ayant une longueur d'onde dans la plage de 0,7 à 1,4 µm.

14. Procédé selon l'une au moins des revendications 8 à 13,
dans lequel, pendant la mise en œuvre de l'étape (B), la lentille est en rotation par rapport à une source de lumière qui émet de la lumière ayant une longueur d'onde dans la plage de 0,7 µm à 1,4 µm, et/ou l'irradiation dans l'étape (B) est effectuée de manière puisée.

15. Lentille (1) ayant un revêtement de vernis de bord (16) pouvant être obtenu par utilisation d'un système de vernis selon l'une au moins des revendications 1 à 7 et/ou pouvant être obtenu par un procédé selon l'une au moins des revendications 8 à 14.
